# EUROPÄISCHE PATENTANMELDUNG

(11) **EP 4 790 494 A1**
(43) Veröffentlichungstag der Anmeldung: **12.08.2026**
(21) Anmeldenummer: 25156855.6
(22) Anmeldetag: 10.02.2025
(51) Int. Cl.: G05B 13/02, G05B 13/04, G05B 17/02

(54) **VERFAHREN UND MASCHINENSTEUERUNG ZUM STEUERN EINER MASCHINE**

(71) Anmelder: Siemens Aktiengesellschaft, 80333 München (DE)
(72) Erfinder: Hein, Daniel, 81549 München (DE); Udluft, Steffen, 82223 Eichenau (DE); Wissmann, Philipp, 81377 München (DE)
(74) Vertreter: Siemens Patent Attorneys

(57) **Zusammenfassung**

Anhand von in ersten Trainingsdatensätzen (TD1) spezifizierten Betriebszuständen (S) und Steueraktionen (A) werden einem jeweiligen Betriebszustand (S) der Maschine (M) mehrere alternativ anwendbare Steueraktionen (A1, ..., AN) zugeordnet. Damit wird ein Maschinenlernmodul (NN) darauf trainiert, anhand eines Betriebszustands und einer Steueraktion eine über eine Zustandstrajektorie (ST) akkumulierte Performanz der Maschine zu prädizieren. Eine jeweilige Zustandstrajektorie (ST) wird konstruiert, indem eine jeweils anzuwendende Steueraktion (AS) abhängig von Ausgabewerten des Maschinenlernmoduls (NN) und ein jeweiliger aus Anwendung dieser Steuerkation (AS) resultierender Folgezustand (S') mittels eines Simulators (SIM) der Maschine (M) ermittelt wird. Weiterhin wird mittels eines Performanzbewerters (EV) ein über die Zustandstrajektorie (ST) akkumulierter Performanzwert (R) ermittelt und das Maschinenlernmodul (NN) wird darauf trainiert, die akkumulierten Performanzwerte (R) zu reproduzieren.

Zum Steuern der Maschine (M) wird für die einem jeweiligen aktuellen Betriebszustand (S) der Maschine zugeordneten alternativen Steueraktionen (A1, ..., AN) jeweils eine akkumulierte Performanz (R1, ..., RN) mittels des trainierten Maschinenlernmoduls (NN) prädiziert. Die Maschine (M) wird dann durch eine die prädizierte akkumulierte Performanz optimierende Steueraktion (AS) angesteuert. Bei nicht erfolgreicher Ausführung der optimierenden Steueraktion (AS) wird eine andere der alternativen Steueraktionen (A1, ..., AN) abhängig von deren akkumulierter Performanz (R1, ..., RN) zum Steuern der Maschine (M) selektiert.

## Beschreibung

Bei der Steuerung komplexer Maschinen, wie z.B. Robotern, Motoren, Fertigungsanlagen, Werkzeugmaschinen, Fräsmaschinen, Gasturbinen, Windturbinen, Kühlanlagen, Heizungsanlagen oder Verbrennungskraftmaschinen werden zunehmend datengetriebene Verfahren des maschinellen Lernens eingesetzt.

Mittels derartiger Lernverfahren kann eine Maschinensteuerung darauf trainiert werden, für einen jeweiligen Betriebszustand der Maschine eine zustandsspezifische Steueraktion zum Steuern der Maschine zu generieren, die spezifisch ein gewünschtes oder optimiertes Verhalten der Maschine bewirkt und damit deren Performanz optimiert. Ein Verfahren, durch das eine im aktuellen Zustand anzuwendende Steueraktion ausgewählt wird, wird häufig auch als Policy oder Aktionsauswahlregel bezeichnet.

Zum Trainieren einer solchen lernbasierten Maschinensteuerung steht eine Vielzahl bekannter Trainingsverfahren, wie z.B. Verfahren des bestärkenden Lernens zur Verfügung. Ein bestärkendes Lernen wird häufig auch als Reinforcement-Learning bezeichnet.

Für ein erfolgreiches Training werden in der Regel große Mengen von Betriebsdaten der zu steuernden Maschine oder einer dazu ähnlichen Maschine als Trainingsdaten benötigt. Die Trainingsdaten sollten dabei die möglichen Betriebszustände und andere Betriebsbedingungen der Maschine möglichst repräsentativ abdecken. In vielen Fällen liegen derartige Trainingsdaten in Form von Datenbanken vor, in denen an der Maschine aufgezeichnete Betriebsdaten gespeichert sind. Derartige gespeicherte Trainingsdaten werden oft auch als Batch-Trainingsdaten oder Offline-Trainingsdaten bezeichnet.

Im laufenden Betrieb einer Maschine tritt häufig das Problem auf, dass sich deren Betriebsbedingungen in unvorhergesehener Weise ändern und/oder dass eine Änderung nicht, nicht rechtzeitig oder unvollständig erfasst wird. Insbesondere kann sich erst bei der versuchten Anwendung einer Steueraktion herausstellen, dass die Steueraktion aktuell nicht oder nicht erfolgreich durchführbar ist. So wird beispielsweise eine Blockierung eines Ventils in vielen Fällen erst dann erkannt, wenn eine Steueraktion zum Schließen oder Öffnen des Ventils ausgeführt werden soll.

In solchen Fällen sollte insbesondere bei sicherheitskritischen oder prozesskritischen Anwendungen möglichst nahtlos eine geeignete alternative Steueraktion ausgeführt werden.

Es ist Aufgabe der vorliegenden Erfindung, ein Verfahren sowie eine Maschinensteuerung zum Steuern einer Maschine anzugeben, die robuster gegenüber unvorhergesehenen Ereignissen im Betriebsablauf sind.

Gelöst wird diese Aufgabe durch ein Verfahren mit den Merkmalen des Patentanspruchs 1, durch eine Maschinensteuerung mit den Merkmalen des Patentanspruchs 11, durch ein Computerprogrammprodukt mit den Merkmalen des Patentanspruchs 12 sowie durch ein computerlesbares Speichermedium mit den Merkmalen des Patentanspruchs 13.

Erfindungsgemäß wird zum Steuern einer Maschine eine Vielzahl von ersten Trainingsdatensätzen eingelesen, in denen jeweils einem Betriebszustand der Maschine eine Steueraktion zugeordnet ist. Aus den in den ersten Trainingsdatensätzen spezifizierten Betriebszuständen und Steueraktionen werden weitere Trainingsdatensätze mit neuen Zuordnungen von Betriebszuständen und Steueraktionen generiert, so dass einem jeweiligen Betriebszustand mehrere alternative Steueraktionen zugeordnet werden. Weiterhin wird ein Maschinenlernmodul mittels der ersten und der weiteren Trainingsdatensätze darauf trainiert, anhand eines Betriebszustandes und einer Steueraktion eine über eine Zustandstrajektorie aufeinanderfolgender Betriebszustände akkumulierte Performanz der Maschine als resultierenden Ausgabewert zu prädizieren. Dabei wird ein einem jeweils betrachteten Betriebszustand in einer Zustandstrajektorie nachfolgender Betriebszustand ermittelt, indem für die dem betrachteten Betriebszustand zugeordneten alternativen Steueraktionen jeweils der betrachtete Betriebszustand sowie die jeweilige alternative Steueraktion in das Maschinenlernmodul eingespeist werden, abhängig von den resultierenden Ausgabewerten des Maschinenlernmoduls eine der alternativen Steueraktionen selektiert wird, und mittels eines Simulators der Maschine ein aus Anwendung der selektierten Steueraktion auf den betrachteten Betriebszustand resultierender Betriebszustand als nachfolgender Betriebszustand ermittelt wird. Weiterhin wird mittels eines Performanzbewerters ein über die Betriebszustände einer jeweiligen Zustandstrajektorie akkumulierter Performanzwert ermittelt, und das Maschinenlernmodul wird darauf trainiert, die ermittelten akkumulierten Performanzwerte zu reproduzieren. Zum Steuern der Maschine wird ein aktueller Betriebszustand der Maschine erfasst, und es wird für dem aktuellen Betriebszustand zugeordnete alternative Steueraktionen jeweils eine akkumulierte Performanz mittels des trainierten Maschinenlernmoduls prädiziert. Die Maschine wird dann durch eine die prädizierte akkumulierte Performanz optimierende Steueraktion angesteuert, und bei nicht erfolgreicher Ausführung der optimierenden Steueraktion wird eine andere der alternativen Steueraktionen abhängig von deren akkumulierter Performanz zum Steuern der Maschine selektiert.

Zum Ausführen des erfindungsgemäßen Verfahrens sind eine Maschinensteuerung, ein Computerprogrammprodukt sowie ein vorzugsweise nichtflüchtiges computerlesbares Speichermedium vorgesehen.

Das erfindungsgemäße Verfahren sowie die erfindungsgemäße Maschinensteuerung können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden. Darüber hinaus kann das erfindungsgemäße Verfahren zumindest teilweise in einer Cloud und/oder in einer Edge-Computing-Umgebung ausgeführt werden.

Ein Vorteil der Erfindung ist insbesondere darin zu sehen, dass bei einer nicht erfolgreichen Ausführung einer Steueraktion ein oder mehrere alternative Steueraktionen, die hinsichtlich ihrer akkumulierten Performanz bereits bewertet sind, unmittelbar angewandt werden können. So kann zum Beispiel für den Fall, dass die Steueraktion mit der besten akkumulierten Performanz aktuell nicht anwendbar ist, unmittelbar die alternative Steueraktion mit der zweitbesten akkumulierten Performanz angewandt werden.

Darüber hinaus erweist sich in vielen Fällen, dass die jeweilige akkumulierte Performanz auch für Zustandstrajektorien, die durch die künstlich generierten neuen Zuordnungen von Betriebszuständen und Steueraktionen induziert werden, durch das trainierte Maschinenlernmodul verhältnismäßig genau prädiziert wird.

Vorteilhafte Ausführungsformen und Weiterbildungen der Erfindung sind in den abhängigen Ansprüchen angegeben.

Nach einer vorteilhaften Ausführungsform der Erfindung können dem aktuellen Betriebszustand zugeordnete alternative Steueraktionen zusammen mit einer jeweils prädizierten akkumulierten Performanz über eine Benutzerschnittstelle zur Auswahl einer auszuführenden Steueraktion ausgegeben werden. Dies erlaubt eine informierte Entscheidung oder ein informiertes Eingreifen eines Operators, insbesondere bei unvorhergesehenen Ereignissen im Betriebsablauf. Durch Vergleich der akkumulierten Performanzwerte der alternativen Steueraktionen kann der Operator in vielen Fällen informiert entscheiden, ob eine gegebene Steueraktion ohne wesentliche Performanzeinbußen durch eine alternative Steueraktion ersetzbar ist, oder er kann zumindest abwägen, ob eine solche Ersetzung akzeptabel ist oder nicht.

Gemäß einer weiteren vorteilhaften Ausführungsform der Erfindung kann einem jeweiligen in den ersten Trainingsdatensätzen spezifizierten Betriebszustand neben einer Steueraktion ein aus Anwendung der Steueraktion auf den Betriebszustand resultierender Folgezustand zugeordnet sein. Derartige Daten über Folgezustände können bei einer Erfassung von Betriebszuständen und Steueraktionen in vielen Fällen auf einfache Weise miterfasst werden.

Damit kann der Simulator mittels der ersten Trainingsdatensätze, vorzugsweise vor dem Training des Maschinenlernmoduls darauf trainiert werden, anhand eines jeweiligen Betriebszustands und einer jeweiligen Steueraktion den jeweils resultierenden Folgezustand zu reproduzieren. Auf diese Weise können die ersten Trainingsdatensätze auch dazu verwendet werden, den Simulator zu implementieren. Die zum Training des Simulators verwendeten ersten Trainingsdatensätze enthalten zwar die neuen Zuordnungen von alternativen Steueraktionen im Allgemeinen nicht. Es erweist sich aber in vielen Fällen, dass derart trainierte Simulatoren über ein gutes Abstraktionsvermögen verfügen und Folgezustände auch für neue Steueraktionen verhältnismäßig korrekt prädizieren können. Darüber hinaus können eventuelle Prädiktionsungenauigkeiten des Simulators oft durch das Training des Maschinenlernmoduls zumindest teilweise kompensiert werden.

Vorteilhafterweise können die in den ersten Trainingsdatensätzen spezifizierten Betriebszustände, Steueraktionen und/oder Folgezustände in einem laufenden Betrieb der Maschine oder einer dazu baugleichen oder ähnlichen Maschine erfasst werden. Auf diese Weise können realistische und auf die zu steuernde Maschine spezifisch zugeschnittene Trainingsdaten gewonnen werden. Die Trainingsdaten können insbesondere mittels einer Sensorik der Maschine oder der dazu ähnlichen Maschine gewonnen werden. Die Sensorik kann zu diesem Zweck fortlaufend Zustandsgrößen, Zustandsparameter, Steuerparameter oder andere Betriebsparameter der betreffenden Maschine messen oder ermitteln und in Form von Trainingsdatensätzen abspeichern oder anderweitig bereitstellen.

Nach einer weiteren vorteilhaften Ausführungsform der Erfindung, können Steueraktionen ermittelt werden, die in einem jeweiligen Betriebszustand anwendbar sind. Dem jeweiligen Betriebszustand können dann alle anwendbaren Steueraktionen als alternative Steueraktionen zugeordnet werden. Auf diese Weise kann durch die Generierung der weiteren Trainingsdatensätze ein Raum potenzieller Steuerungsmöglichkeiten besser abgedeckt werden. Damit können auch Zustandstrajektorien bei der Prädiktion der Performanz bzw. beim Steuern der Maschine berücksichtigt werden, die nicht von den ersten Trainingsdatensätzen abgedeckt werden.

Alternativ oder zusätzlich können für einen jeweiligen Betriebszustand mehrere Steueraktionen nach einem vorgegebenen Kriterium aus allen in den ersten Trainingsdatensätzen spezifizierten Steueraktionen selektiert und dem jeweiligen Betriebszustand als alternative Steueraktionen zugeordnet werden. Als Kriterium kann insbesondere eine Ausführbarkeit, eine Zulässigkeit, ein Anwendungsrisiko, eine Zuverlässigkeit, eine Ähnlichkeit zu anderen Steueraktionen und/oder eine Anwendungshäufigkeit der zu selektierenden Steueraktion verwendet werden.

Gemäß einer weiteren vorteilhaften Ausführungsform der Erfindung kann bei der Ermittlung eines nachfolgenden Betriebszustands der Zustandstrajektorie diejenige alternative Steueraktion selektiert werden, die den resultierenden Ausgabewert des Maschinenlernmoduls optimiert, insbesondere maximiert. Insofern das Training des Maschinenlernmoduls darauf gerichtet ist, dass dessen Ausgabewert die akkumulierte Performanz reproduziert, ist zu erwarten, dass eine den Ausgabewert optimierende alternative Steueraktion im Laufe des Trainings mit zunehmender Häufigkeit mit einer die akkumulierte Performanz optimierenden Steueraktion übereinstimmt. Entsprechend geben die im Laufe des Trainings des Maschinenlernmoduls ermittelten Zustandstrajektorien die im performanzoptimierten Betrieb der Maschine durchlaufenen Zustandstrajektorien in vielen Fällen hinreichend realistisch wieder.

Nach einer weiteren vorteilhaften Ausführungsform der Erfindung kann bei einer nicht erfolgreichen Ausführung einer ersten Steueraktion diejenige andere alternative Steueraktion zum Steuern der Maschine selektiert werden, für die eine gegenüber der ersten Steueraktion nächstbeste akkumulierte Performanz prädiziert wurde. Auf diese Weise kann bereits unmittelbar nach einer Detektion einer Ausführungsstörung eine andere hinsichtlich ihrer akkumulierten Performanz bereits bewerte Steueraktion ausgeführt werden. Darüber hinaus können resultierende Performanzeinbußen unmittelbar bewertet, berücksichtigt und/oder kommuniziert werden. Optional kann vor Ausführung der anderen alternativen Steueraktion geprüft werden, ob ein Abstand zwischen der besten und der nächstbesten akkumulierten Performanz einen vorgegebenen Schwellwert überschreitet. Falls der Schwellwert überschritten wird, kann eine Ausführung der anderen alternativen Steueraktion zumindest vorläufig unterdrückt werden, und/oder es kann eine Rückfrage bei einem Operator ausgelöst werden.

Nach einer vorteilhaften Weiterbildung der Erfindung kann eine Aktionsauswahlregel zum Auswählen einer in einem aktuellen Betriebszustand anzuwendenden Steueraktion dergestalt implementiert werden, dass für den aktuellen Betriebszustand und eine oder mehrere anwendbare Steueraktionen jeweils eine akkumulierte Performanz durch das trainierte Maschinenlernmodul prädiziert wird, und dass dann diejenige der einen oder mehreren anwendbaren Steueraktionen als anzuwendende Steueraktion ausgewählt wird, für die beste akkumulierte Performanz prädiziert wurde. Damit kann mittels des trainierten Maschinenlernmoduls auf einfache Weise eine effiziente performanzoptimierende Policy implementiert werden. Die Auswahl der anzuwendenden Steueraktion kann beispielsweise mittels einer sogenannten arg-max-Funktion (arg max: Argument des Maximums) erfolgen.

Weiterhin kann während des Trainings des Maschinenlernmoduls eine Regelungsgüte aus den akkumulierten Performanzwerten abgeleitet werden. Das Training kann dann so lange weitergeführt werden, bis eine vorgegebene Regelungsgüte erreicht ist. Als Regelungsgüte kann insbesondere ein statistischer Mittelwert der akkumulierten Performanzwerte abgeleitet werden, beispielsweise ein über die Zeit gleitender Mittelwert.

Ein Ausführungsbeispiel der Erfindung wird nachfolgend anhand der Zeichnung näher erläutert. Dabei veranschaulichen jeweils in schematischer Darstellung:
Figur 1eine lernbasierte Maschinensteuerung beim Steuern einer Maschine,
Figur 2 ein Training eines lernbasierten Simulators der Maschine, und
Figur 3 ein Training eines Maschinenlernmoduls zur Prädiktion einer akkumulierten Performanz von Zustandstrajektorien.

Insofern in verschiedenen Figuren gleiche oder korrespondierende Bezugszeichen verwendet werden, bezeichnen diese Bezugszeichen - sofern nicht anders angegeben - die gleichen oder korrespondierende Entitäten, die insbesondere wie im Zusammenhang mit der betreffenden Figur beschrieben implementiert oder ausgestaltet sein können.

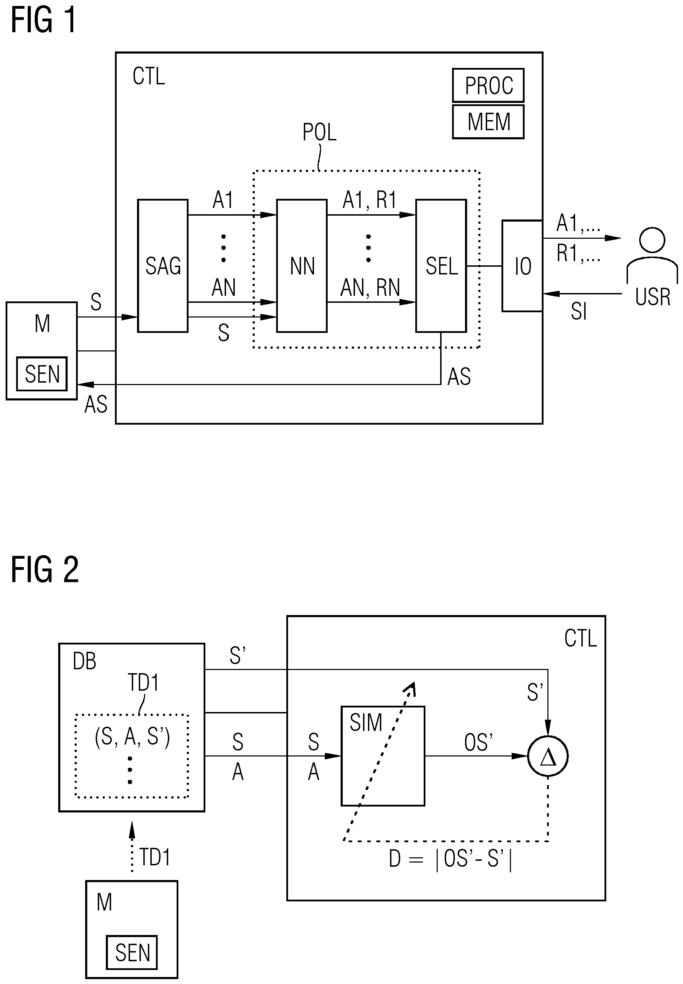

Figur 1 veranschaulicht beispielhaft eine lernbasierte Maschinensteuerung CTL beim Steuern einer Maschine M, die im vorliegenden Ausführungsbeispiel als Roboter, z.B. als Fertigungsroboter ausgestaltet ist. Alternativ oder zusätzlich kann die Maschine M auch ein Motor, eine Fertigungsanlage, eine Fabrik, eine Werkzeugmaschine, eine Fräsmaschine, eine Gasturbine, eine Windturbine, eine Dampfturbine, ein chemischer Reaktor, eine Verbrennungskraftmaschine, eine Kühlanlage oder eine Heizungsanlage sein.

Die Maschine M ist mit der Maschinensteuerung CTL gekoppelt, die als Teil der Maschine M oder ganz oder teilweise extern zur Maschine M implementiert sein kann. In Figur 1 ist die Maschinensteuerung CTL aus Übersichtlichkeitsgründen extern zur Maschine M dargestellt. Die Maschinensteuerung CTL umfasst einen oder mehrere Prozessoren PROC zum Ausführen der beanspruchten Verfahrensschritte der Maschinensteuerung CTL sowie einen oder mehrere mit dem Prozessor PROC gekoppelte Speicher MEM zum Speichern der von der Maschinensteuerung CTL zu verarbeitenden Daten.

Die Maschine M verfügt über eine Sensorik SEN, die fortlaufend verschiedene aktuelle Betriebsparameter der Maschine M im laufenden Betrieb misst und als Zustandswerte ausgibt. Durch die Zustandswerte können insbesondere physikalische, regelungstechnische, chemische und/oder wirkungstechnische Zustandsgrößen, Sensordaten, Umgebungsdaten oder andere im Betrieb der Maschine M anfallende oder den Betrieb beeinflussende Betriebsparameter quantifiziert werden. Die Zustandsgrößen können dabei eine Temperatur, einen Druck, eine Einstellung, eine Aktorstellung, eine Ventilposition, eine Schadstoffemission, eine Auslastung, einen Ressourcenverbrauch und/oder eine Leistung der Maschine M oder einer Komponente davon betreffen. Bei einer Fertigungsanlage oder einer Werkzeugmaschine können die Zustandswerte auch eine Produktqualität, eine Verarbeitungsqualität oder eine andere Produkteigenschaft betreffen. Bei einer Turbine können die Zustandswerte eine Turbinenleistung, eine Rotationsgeschwindigkeit, Vibrationsfrequenzen, Vibrationsamplituden, Verbrennungsdynamiken, Verbrennungswechseldruckamplituden oder Stickoxidkonzentrationen betreffen.

Die von der Sensorik SEN aktuell gemessenen Zustandswerte sowie gegebenenfalls anderweitig ermittelte Zustandswerte der Maschine M werden zu einem aktuellen Zustandsdatensatz S zusammengefasst, durch den ein aktueller Betriebszustand der Maschine M quantifiziert wird.

Durch die fortlaufende Ermittlung aktueller Zustandswerte wird im laufenden Betrieb der Maschine M eine zeitliche Abfolge aktueller Zustandsdatensätze S erzeugt, die fortlaufend von der Maschine M zur Maschinensteuerung CTL übermittelt wird.

Durch die Maschinensteuerung CTL werden aus den einen jeweiligen aktuellen Betriebszustand der Maschine M quantifizierenden Zustandsdatensätzen S aktuell anzuwendende Steueraktionen AS zum Steuern der Maschine M abgeleitet. Die anzuwendenden Steueraktionen AS können dann beispielsweise jeweils in Form eines Steuersignals an die Maschine M übermittelt werden.

Die anzuwendenden Steueraktionen AS werden mittels eines Maschinenlernmoduls NN der Maschinensteuerung CTL ermittelt.

Das Maschinenlernmodul NN wird vorab darauf trainiert, anhand eines Betriebszustands und einer Steueraktion eine hierdurch induzierte, über mehrere Zeitschritte in die Zukunft akkumulierte Performanz der Maschine M zu prädizieren. Eine derartige mehrere Zeitschritte in die Zukunft akkumulierte Performanz wird im Kontext des maschinellen Lernens häufig auch als "Return" bezeichnet. Ein Ablauf dieses Trainings wird unten näher erläutert.

Die Performanz kann dabei insbesondere eine Leistung, einen Ertrag, eine Geschwindigkeit, eine Laufzeit, eine Präzision, eine Fehlerrate, einen Ressourcenverbrauch, einen Wirkungsgrad, eine Effizienz, einen Schadstoffausstoß, eine Stabilität, einen Verschleiß, eine Lebensdauer, eine physikalische Eigenschaft, eine mechanische Eigenschaft, eine elektrische Eigenschaft, eine einzuhaltende Nebenbedingung oder andere zu optimierende Zielgrößen der Maschine M oder einer ihrer Komponenten betreffen.

Zum Ermitteln derjenigen Steueraktion AS, die in einem durch einen aktuellen Zustandsdatensatz S spezifizierten Betriebszustand anzuwenden ist, wird der aktuelle Zustandsdatensatz S in einen Steueraktionsgenerator SAG der Maschinensteuerung CTL eingespeist.

Der Steueraktionsgenerator SAG dient unter Anderem dem Zweck, für einen jeweiligen Betriebszustand diejenigen Steueraktionen zu ermitteln, die in diesem Betriebszustand potenziell anwendbar sind. Welche Steueraktionen anwendbar sind, kann dabei nach einem vorgegebenen Kriterium bestimmt werden. Als Kriterium kann insbesondere eine Ausführbarkeit, eine Zulässigkeit, ein Anwendungsrisiko, eine Zuverlässigkeit, eine Ähnlichkeit zu anderen Steueraktionen und/oder eine Anwendungshäufigkeit der betreffenden Steueraktion verwendet werden. Die potenziell anwendbaren Steueraktionen können insbesondere einer Datenbank entnommen werden, in der im laufenden Betrieb erfasste Betriebszustände und Steueraktionen der Maschine M oder einer dazu baugleichen Maschine hinterlegt sind.

Für das vorliegende Ausführungsbeispiel sei angenommen, dass in dem durch den Zustandsdatensatz S spezifizierten Betriebszustand der Maschine M Steueraktionen A1, A2, ..., AN potenziell anwendbar sind. Letztere werden als alternative Steueraktionen bezeichnet, insofern sie zueinander alternativ angewandt werden können. Dementsprechend generiert der Steueraktionsgenerator SAG anhand des Zustandsdatensatzes S die alternativen Steueraktionen A1,...,AN, die jeweils in Zuordnung zu dem Zustandsdatensatz S in das trainierte Maschinenlernmodul NN als Eingabedaten einspeist werden.

Anhand des Zustandsdatensatzes S und einer jeweiligen alternativen Steueraktion A1, ..., bzw. AN prädiziert das trainierte Maschinenlernmodul NN eine jeweilige über mehrere Zeitschritte in die Zukunft akkumulierte Performanz R1, ..., bzw, RN der Maschine M als Ausgabedaten. Die jeweilige alternative Steueraktion A1, ..., bzw. AN wird der hierdurch jeweils induzierten akkumulierten Performanz R1, ..., bzw, RN zugeordnet.

Die alternativen Steueraktionen A1,...,AN werden jeweils zusammen mit der jeweils zugeordneten akkumulierten Performanz R1, ..., bzw. RN zu einem Selektionsmodul SEL der Maschinensteuerung CTL übermittelt.

Durch das Selektionsmodul SEL wird zunächst diejenige der alternativen Steueraktionen A1, ..., AN als anzuwendende Steueraktion AS selektiert, der die höchste oder beste akkumulierte Performanz R1,... oder RN zugeordnet ist. Diese performanzoptimierende Steueraktion AS wird vom Selektionsmodul SEL ausgegeben und von der Maschinensteuerung CTL beispielsweise in Form eines Steuersignals zur Maschine M übermittelt, um diese zu steuern.

Eine erfolgreiche Ausführung einer anzuwendenden Steueraktion AS wird durch die Maschinensteuerung CTL vorzugsweise mittels der Sensorik SEN überwacht. Falls dabei detektiert wird, dass die anzuwendende Steueraktion AS aktuell nicht erfolgreich ausführbar ist oder nicht erfolgreich ausgeführt wurde, wird durch das Selektionsmodul SEL eine andere der alternativen Steueraktionen A1, ..., AN zum Steuern der Maschine M selektiert. Vorzugsweise wird hierbei diejenige andere alternative Steueraktion selektiert, für die eine gegenüber der vorher angewandten Steueraktion AS nächstbeste akkumulierte Performanz R1, R2 ... oder RN prädiziert wurde. Die so selektierte Steueraktion wird dann als anzuwendende Steueraktion zur Maschine M übermittelt, um diese zu steuern. Auf diese Weise kann bereits unmittelbar nach einer Detektion einer Ausführungsstörung eine andere hinsichtlich ihrer akkumulierten Performanz bereits bewerte Steueraktion angewandt werden.

Die Maschine M wird gesteuert, indem die jeweils an die Maschine M übermittelte Steueraktion durch die Maschine M ausgeführt wird. Auf diese Weise kann z.B. ein Roboter durch entsprechende Steueraktionen dazu veranlasst werden, eine optimierte Bewegungstrajektorie auszuführen. Analog dazu kann bei einer Gasturbine eine Gaszufuhr, eine Gasverteilung und/oder eine Luftzufuhr durch entsprechende Steueraktionen eingestellt werden.

Optional kann vor Ausführung der selektierten anderen alternativen Steueraktion durch die Maschinensteuerung CTL geprüft werden, ob ein Abstand zwischen der akkumulierten Performanz der vorher angewandten Steueraktion AS und der nächstbesten akkumulierten Performanz einen vorgegebenen Schwellwert überschreitet. Falls der Schwellwert überschritten wird, kann eine Ausführung der selektierten anderen alternativen Steueraktion zumindest vorläufig unterdrückt werden, und/oder es kann eine Rückfrage bei einem Operator USR ausgelöst werden.

Alternativ oder zusätzlich können die dem aktuellen Betriebszustand zugeordneten alternativen Steueraktionen A1,..., AN oder eine Auswahl davon zusammen mit der jeweils zugeordneten akkumulierten Performanz R1,..., bzw. RN vom Selektionsmodul SEL über eine Benutzerschnittstelle IO an den Operator USR zur Auswahl einer auszuführenden Steueraktion ausgegeben werden. Dies erlaubt eine informierte Entscheidung oder ein informiertes Eingreifen des Operators USR, insbesondere bei unvorhergesehenen Ereignissen im Betriebsablauf. Durch Vergleich der akkumulierten Performanz der alternativen Steueraktionen kann der Operator in vielen Fällen informiert entscheiden, ob eine gegebene Steueraktion ohne wesentliche Performanzeinbußen durch eine alternative Steueraktion ersetzbar ist, oder er kann zumindest abwägen, ob eine solche Ersetzung akzeptabel ist oder nicht.

Eine vom Operator USR daraufhin eingegebene, die auszuführende Steueraktion identifizierende Selektionsinformation SI kann dann durch das Selektionsmodul SEL über die Benutzerschnittstelle IO eingelesen werden. Anhand der eingelesenen Selektionsinformation SI kann das Selektionsmodul SEL die auszuführende Steueraktion selektieren und zum Steuern der Maschine M an diese übermitteln.

Das trainierte Maschinelernmodul NN kann zusammen mit dem Selektionsmodul SEL als Aktionsauswahlregel oder Policy POL aufgefasst werden. Im Sinne einer solchen Policy POL wird durch das trainierte Maschinenlernmodul NN für einen jeweiligen Betriebszustand und mehrere alternative anwendbare Steueraktionen jeweils eine akkumulierte Performanz prädiziert, womit das Selektionsmodul SEL dann eine anzuwendende Steueraktion selektiert.

Figur 2 veranschaulicht ein Training eines lernbasierten Simulators SIM der Maschine M. Der Simulator SIM ist datengetrieben trainierbar und soll einen Zustandsübergang bei Anwendung einer Steueraktion auf einen vorgegebenen Betriebszustand der Maschine M modellieren. Ein solcher Simulator wird häufig auch als Transitionsmodell oder dynamisches Systemmodell bezeichnet.

Der Simulator SIM kann in der Maschinensteuerung CTL oder ganz oder teilweise extern dazu implementiert sein. Im vorliegenden Ausführungsbeispiel ist der Simulator SIM als künstliches neuronales Netz, insbesondere als neuronales Feedforward-Netz implementiert.

Der Simulator SIM soll anhand von Trainingsdaten darauf trainiert werden, anhand eines jeweiligen Betriebszustands der Maschine M und einer jeweiligen Steueraktion einen aus Anwendung der Steueraktion auf diesen Betriebszustand resultierenden Folgezustand der Maschine M möglichst genau vorherzusagen.

Das Training des Simulators SIM wird anhand einer großen Menge von ersten Trainingsdatensätzen TD1 ausgeführt, die im vorliegenden Ausführungsbeispiel in einer an die Maschinensteuerung CTL gekoppelten Datenbank DB gespeichert sind.

Ein jeweiliger erster Trainingsdatensatz TD1 umfasst hierbei einen Zustandsdatensatz S, einen Aktionsdatensatz A sowie einen Folgezustandsdatensatz S'. Wie oben bereits erwähnt, spezifiziert ein jeweiliger Zustandsdatensatz S einen jeweiligen Betriebszustand der Maschine M und ein jeweiliger Aktionsdatensatz A eine jeweilige an der Maschine M vornehmbare Steueraktion. Entsprechend wird durch einen jeweiligen Folgezustandsdatensatz S' ein jeweiliger aus Anwendung der jeweiligen Steueraktion auf den jeweiligen Betriebszustand resultierender Folgezustand, d.h. ein in einem nachfolgenden Zeitschritt eingenommener Betriebszustand der Maschine M spezifiziert. Die in einem jeweiligen ersten Trainingsdatensatz TD1 enthaltenen Datensätze S, A und S' sind dort einander zugeordnet. Entsprechend sind dem hierdurch jeweils spezifizierten Betriebszustand die jeweils spezifizierte Steueraktion und der jeweils spezifizierte Folgezustand zugeordnet.

Die ersten Trainingsdatensätze TD1 werden vorzugsweise im laufenden Betrieb der Maschine M oder einer dazu baugleichen oder ähnlichen Maschine gewonnen. Beispielsweise indem fortlaufend im Betrieb eingenommene Betriebszustände, ausgeführte Steueraktionen und resultierende Folgezustände gemessen oder anderweitig erfasst werden.

Zum Training des Simulators SIM werden diesem eine Vielzahl von Paaren (S, A) aus einem jeweiligen Zustandsdatensatz S und einem jeweils zugeordneten Aktionsdatensatz A als Eingabedaten zugeführt. Der Simulator SIM soll so trainiert werden, dass dessen Ausgabedaten einen jeweils resultierenden Folgezustand möglichst genau reproduzieren. Das Training erfolgt vorzugsweise mittels eines Verfahrens des überwachten maschinellen Lernens.

Unter einem Training sei hierbei allgemein eine Optimierung einer Abbildung von Eingabedaten, hier den Paaren (S, A) einer maschinellen Lernroutine auf deren Ausgabedaten verstanden. Diese Abbildung wird nach vorgegebenen und/oder zu lernenden Kriterien während einer Trainingsphase optimiert. Als Kriterien können insbesondere bei Prädiktionsmodellen ein Prädiktionsfehler und bei Steuermodellen ein Erfolg einer Steueraktion herangezogen werden. Durch das Training können beispielsweise Vernetzungsstrukturen von Neuronen eines neuronalen Netzes und/oder Gewichte von Verbindungen zwischen den Neuronen so eingestellt bzw. optimiert werden, dass die vorgegebenen Kriterien möglichst gut erfüllt werden. Das Training kann somit als Optimierungsproblem aufgefasst werden. Für derartige Optimierungsprobleme auf dem Gebiet des maschinellen Lernens sind eine Vielzahl von effizienten Optimierungsverfahren verfügbar, insbesondere gradientenbasierte Optimierungsverfahren, gradientenfreie Optimierungsverfahren, Rückpropagationsverfahren, Partikelschwarmoptimierungen, genetische Optimierungsverfahren und/oder populationsbasierte Optimierungsverfahren.

Trainieren lassen sich so insbesondere künstliche neuronale Netze, rekurrente neuronale Netze, faltende neuronale Netze, Perzeptrone, bayessche neuronale Netze, Autoencoder, variationale Autoencoder, Gaußprozesse, Deep-Learning-Architekturen, Support-Vektor-Maschinen, datengetriebene Regressionsmodelle, K-nächste-Nachbarn-Klassifikatoren, physikalische Modelle oder Entscheidungsbäume. Entsprechend kann der Simulator SIM und/oder das Maschinenlernmodul NN auch durch eines oder mehrere der vorstehend aufgeführten Maschinenlernmodelle implementiert sein oder ein oder mehrere derartige Maschinenlernmodelle umfassen.

Im vorliegenden Ausführungsbeispiel werden dem Simulator SIM - wie oben schon erwähnt - Zustandsdatensätze S sowie Aktionsdatensätze A aus den Trainingsdaten als Eingabedaten zugeführt. Zu einem jeweiligen Paar (S, A) aus Zustandsdatensatz S und zugeordnetem Aktionsdatensatz A wird durch den Simulator SIM ein Ausgabedatensatz OS' als prädizierter Folgezustandsdatensatz generiert und ausgegeben. Durch das Training des Simulators SIM wird angestrebt, dass die Ausgabedatensätze OS' mit den tatsächlichen Folgezustandsdatensätzen S' möglichst gut übereinstimmen.

Zu diesem Zweck wird eine Abweichung D zwischen einem jeweiligen, aus einem Zustandsdatensatz S und Aktionsdatensatz A generierten Ausgabedatensatz OS' und dem diesem Zustandsdatensatz S und Aktionsdatensatz A zugeordneten Folgezustandsdatensatz S' ermittelt. Die Abweichung D kann hierbei als Reproduktionsfehler oder Prädiktionsfehler des Simulators SIM aufgefasst werden. Der Reproduktionsfehler D kann insbesondere durch Berechnung eines euklidischen Abstands zwischen darstellenden Vektoren der betreffenden Datensätze OS' und S' ermittelt werden, z. B. gemäß D = |OS' - S'| oder D = (OS' - S')².

Die ermittelten Reproduktionsfehler D werden - wie in Figur 2 durch einen strichlierten Pfeil angedeutet - zum Simulator SIM zurückgeführt. Anhand der zurückgeführten Reproduktionsfehler D wird der Simulator SIM darauf trainiert, die Reproduktionsfehler D zumindest im statistischen Mittel zu minimieren. Zur Minimierung der Reproduktionsfehlers D ist eine Vielzahl von effizienten Optimierungsverfahren verfügbar.

Durch die Minimierung der Reproduktionsfehler D wird der Simulator SIM darauf trainiert, zu einem vorgegebenen Betriebszustand und einer vorgegebenen Steueraktion einen resultierenden Folgezustand mit hinreichender Genauigkeit vorherzusagen.

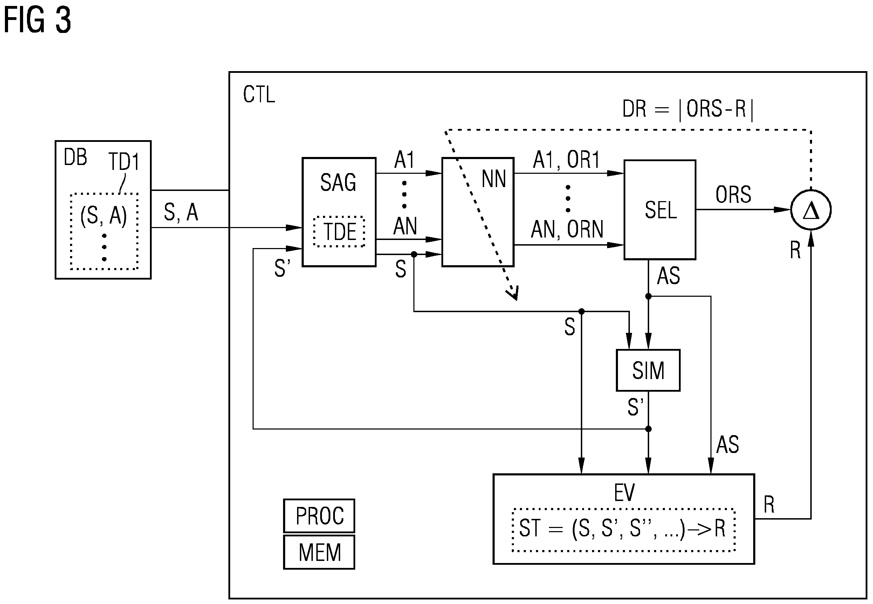

Figur 3 veranschaulicht ein Training des Maschinenlernmoduls NN zur Prädiktion einer akkumulierten Performanz von Zustandstrajektorien. Derartige Zustandstrajektorien umfassen bzw. spezifizieren jeweils eine Abfolge zeitlich aufeinanderfolgender Betriebszustände der Maschine M. Vorteilhafterweise kann eine jeweilige Zustandstrajektorie auch Steueraktionen umfassen bzw. spezifizieren, die jeweils zwischen zwei aufeinanderfolgenden Betriebszuständen ausgeführt wurden.

Die akkumulierte Performanz einer Zustandstrajektorie kann insbesondere dadurch ermittelt werden, dass für die darin enthaltenen Betriebszustände jeweils ein zustandsspezifischer Performanzwert, z.B. eine aktuelle Leistung der Maschine M ermittelt wird, und eine gewichtete Summe über die ermittelten Performanzwerte gebildet wird. Eine akkumulierte Performanz wird im Zusammenhang des bestärkenden Lernens häufig auch als "Return" bezeichnet. Gegebenenfalls können auch durch die Zustandstrajektorie spezifizierte Steueraktionen hinsichtlich ihrer spezifischen Performanz, z.B. hinsichtlich ihres Ressourcenverbrauchs bewertet und in die gewichtete Summe einbezogen werden. Typischerweise werden die Performanzwerte einer Zustandstrajektorie in die Zukunft diskontiert, d.h. die Gewichtungsfaktoren der gewichteten Summe fallen in Richtung Zukunft ab.

Zur Ermittlung der akkumulierten Performanz einer gegebenen Zustandstrajektorie verfügt die Maschinensteuerung CTL über einen Performanzbewerter EV, der die akkumulierte Performanz nach vorgegebenen Performanzkriterien, z.B. wie oben beschrieben aus der gegebenen Zustandstrajektorie ableitet.

In diesem Kontext dient das Training des Maschinenlernmoduls NN dem Zweck, anhand eines gegebenen Betriebszustands und einer gegebenen Steueraktion eine über mehrere Zeitschritte in die Zukunft akkumulierte Performanz der Maschine M möglichst realistisch zu prädizieren. Hierbei besteht das Problem, dass die zu bewertende, in die Zukunft verlaufende Zustandstrajektorie noch nicht bekannt ist, sondern sich erst im Laufe der Zeit aus dem gegebenen Betriebszustand abhängig von den vorgenommenen Steueraktionen entwickelt. Dieses Problem wird dadurch gelöst, dass zum Training des Maschinenlernmoduls NN der trainierte Simulator SIM verwendet wird, um Betriebszustände und Steueraktionen schrittweise in die Zukunft zu extrapolieren bzw. zu prädizieren. Auf diese Weise wird sukzessive eine mehrere Zeitschritte in die Zukunft reichende Zustandstrajektorie konstruiert. Dabei wird eine jeweils anzuwendende Steueraktion mittels des sich im Training befindlichen Maschinenlernmoduls NN ermittelt. Es erweist sich, dass die so ermittelten Steueraktionen im Laufe des Trainings zunehmend realistische Zustandstrajektorien induzieren. Eine Extrapolation von Betriebszuständen in die Zukunft wird häufig auch als "Roll-Out" oder virtueller Roll-Out bezeichnet.

Für die konstruierten Zustandstrajektorien kann dann mittels des Performanzbewerters EV jeweils ein akkumulierter Performanzwert ermittelt und dem jeweiligen Paar aus Betriebszustand und Steueraktion am Anfang der Zustandstrajektorie zugeordnet werden. Die Paare aus Betriebszustand und Steueraktion sowie die akkumulierten Performanzwerte werden schließlich zum Training des Maschinenlernmoduls NN verwendet. Das Training wird im Folgenden näher erläutert.

Zum Training des Maschinenlernmoduls NN wird durch die Maschinensteuerung CTL eine große Menge von ersten Trainingsdatensätzen TD1 aus der Datenbank DB ausgelesen. Die Trainingsdatensätze TD1 umfassen, wie oben bereits erwähnt, jeweils mindestens einen Zustandsdatensatz S sowie einen Aktionsdatensatz A. Wie oben bereits erwähnt, spezifiziert ein jeweiliger, in einem ersten Trainingsdatensatz TD1 enthaltener Zustandsdatensatz S einen jeweiligen Betriebszustand der Maschine M und ein jeweiliger, im selben ersten Trainingsdatensatz TD1 enthaltender Aktionsdatensatz A eine jeweilige in diesem Betriebszustand an der Maschine M vornehmbare Steueraktion.

Die Zustandsdatensätze S und die Aktionsdatensätze A werden in den Steueraktionsgenerator SAG der Maschinensteuerung CTL eingespeist. Der Steueraktionsgenerator SAG speichert die Aktionsdatensätze A der ersten Trainingsdatensätze TD1, insbesondere um sie anderen Zustandsdatensätzen zuzuordnen. Basierend auf den gespeicherten Aktionsdatensätzen A ermittelt der Steueraktionsgenerator SAG zu jedem durch einen Zustandsdatensatz S spezifizierten Betriebszustand, diejenigen Steueraktionen, die in diesem Betriebszustand alternativ zueinander anwendbar sind. Welche Steueraktionen jeweils anwendbar sind, kann wie oben bereits beschrieben nach einem vorgegebenen Kriterium bestimmt werden.

Durch die Zuordnung zusätzlicher alternativer Steueraktionen zu einen jeweiligen Zustandsdatensatz S wird durch den Steueraktionsgenerator SAG eine Vielzahl weiterer Trainingsdatensätze TDE generiert, durch die ein Raum potenzieller Steuerungsmöglichkeiten besser abgedeckt werden kann. Auf diese Weise können auch Zustandstrajektorien bei der Prädiktion der akkumulierten Performanz bzw. beim Steuern der Maschine berücksichtigt werden, die nicht von den ersten Trainingsdatensätzen TD1 abgedeckt werden.

In Analogie zu Figur 1 sei für das vorliegende Ausführungsbeispiel angenommen, dass der Steueraktionsgenerator SAG für einen betrachteten Zustandsdatensatz S mehrere Steueraktionen A1, ..., AN ermittelt, die in dem durch diesen Zustandsdatensatz S spezifizierten Betriebszustand als alternative Steueraktionen anwendbar sind. Infolgedessen generiert der Steueraktionsgenerator SAG mehrere Paare (S, A1), ..., (S, AN) mit dem betrachteten Zustandsdatensatz S und einer jeweiligen der alternativen Steueraktionen A1, ..., AN als weitere Trainingsdatensätze TDE. Diese Paare (S, A1), ..., (S, AN) werden jeweils in das zu trainierende Maschinenlernmodul NN als Eingabedaten einspeist. Darüber hinaus wird der betrachtete Zustandsdatensatz S zum trainierten Simulator SIM sowie zum Performanzbewerter EV übermittelt.

Durch das Maschinenlernmodul NN wird ein jeweiliges eingespeistes Paar (S, A1), ... bzw. (S, AN) in einen Ausgabewert OR1, ... bzw. ORN umgesetzt. Der jeweilige Ausgabewert OR1, ... bzw. ORN wird der jeweils korrespondierenden Steueraktion A1, ... bzw. AN zugeordnet.

Die alternativen Steueraktionen A1, ..., AN werden jeweils zusammen mit dem korrespondierenden Ausgabewert OR1, ..., bzw. ORN zum Selektionsmodul SEL übermittelt. Durch das Selektionsmodul SEL wird dann diejenige der alternativen Steueraktionen A1, ..., AN als anzuwendende Steueraktion AS selektiert, für die der korrespondierende Ausgabewert OR1,... oder ORN maximal ist. Dieser maximale Ausgabewert sei im Folgenden mit ORS bezeichnet. Die anzuwendende Steueraktion AS wird vom Selektionsmodul SEL in den trainierten Simulator SIM sowie in den Performanzbewerter EV eingespeist.

Durch den trainierten Simulator SIM wird aus dem übermittelten Zustandsdatensatz S und der eingespeisten Steueraktion AS ein aus Anwendung der Steueraktion AS auf den durch den Zustandsdatensatz S spezifizierten Betriebszustand resultierender Folgezustand prädiziert. Der Folgezustand wird durch einen Folgezustandsdatensatz S' dargestellt, der vom trainierten Simulator SIM in den Performanzbewerter EV sowie in den Steueraktionsgenerator SAG eingespeist wird.

Der vorstehende prädizierte Folgezustandsdatensatz S' wird in Figur 3 mit dem gleichen Bezugszeichen bezeichnet, wie der in Figur 2 in den ersten Trainingsdatensätzen TD1 enthaltene Folgezustandsdatensatz. Insofern diese Folgezustandsdatensätze in unterschiedlichen Trainingsphasen verwendet werden, sollte eine Verwechslung ausgeschlossen sein.

Der Folgezustandsdatensatz S' wird durch den Steueraktionsgenerator SAG und weiter durch das Maschinenlernmodul NN, das Selektionsmodul SEL und den trainierten Simulator SIM in gleicher Weise verarbeitet, wie der vorher eingespeiste Zustandsdatensatz S. D.h. der Steueraktionsgenerator SAG ermittelt für den Folgezustandsdatensatz S' diejenigen Steueraktionen, die in dem betreffenden Folgezustand alternativ zueinander anwendbar sind, und bildet Paare mit dem Folgezustandsdatensatz S' und einer jeweils ermittelten Steueraktion. Diese Paare werden wiederum in das zu trainierende Maschinenlernmodul NN als Eingabedaten eingespeist. Die weitere Verarbeitung der Eingabedaten durch das Maschinenlernmodul NN, das Selektionsmodul SEL und den trainierten Simulator SIM erfolgt dann in gleicher Weise wie oben für den Fall des Zustandsdatensatzes S beschrieben.

Auf diese Weise werden durch das Selektionsmodul SEL eine weitere anzuwendende Steueraktion AS' und durch den trainierten Simulator SIM ein weiterer Folgezustand prädiziert, der dem vorher prädizierten Folgezustand nachfolgt. Der weitere Folgezustand wird durch einen Folgezustandsdatensatz S" dargestellt, der wiederum in den Performanzbewerter EV sowie in den Steueraktionsgenerator SAG eingespeist wird. Das vorstehende Verfahren wird mit dem in den Steueraktionsgenerator SAG eingespeisten Folgezustandsdatensatz S" und ggf. weiteren Folgezustandsdatensätzen iteriert, bis ein vorgegebenes Abbruchkriterium, z.B. eine maximale Anzahl von Iterationen, erreicht wird.

Indem in den Performanzbewerter EV ausgehend vom Zustandsdatensatz S sukzessive aufeinanderfolgende Folgezustandsdatensätze S', S", ... eingespeist werden, kann dieser eine von S ausgehende Zustandstrajektorie ST = (S, S', S", ...) aufbauen. Vorteilhafterweise können in die Zustandstrajektorie ST auch diejenigen Steueraktionen AS, AS', AS", ... aufgenommen werden, die jeweils zwischen zwei aufeinanderfolgenden Betriebszuständen S, S', S", ... virtuell angewandt wurden. Eine solche Zustandstrajektorie kann dann dargestellt werden als ST = (S, AS, S', AS', S", AS", ...).

Die jeweils aufgebaute Zustandstrajektorie ST wird durch den Performanzbewerter EV wie oben beschrieben hinsichtlich ihrer akkumulierten Performanz bewertet. Dabei ermittelt der Performanzbewerter EV einen akkumulierten Performanzwert R, der die akkumulierte Performanz der Zustandstrajektorie ST quantifiziert. Der ermittelte akkumulierte Performanzwert R wird dem Paar (S, AS) aus Zustandsdatensatz S und selektierter Steueraktion AS vom Anfang der Zustandstrajektorie ST zugeordnet. Damit bildet der akkumulierte Performanzwert R gewissermaßen die zukünftigen Auswirkungen einer Anwendung der Steueraktion AS auf den durch den Zustandsdatensatz S spezifizierten Betriebszustand ab.

Wie oben schon erwähnt, soll das Maschinenlernmoduls NN darauf trainiert werden, die akkumulierte Performanz möglichst genau zu prädizieren. Durch das Training wird angestrebt, dass die selektierten Ausgabewerte ORS des Maschinenlernmoduls NN möglichst wenig von den akkumulierten Performanzwerten R abweichen.

Zu diesem Zweck wird eine Abweichung DR zwischen einem jeweiligen selektierten Ausgabewert ORS und dem korrespondierenden akkumulierten Performanzwert R ermittelt. Die Abweichung DR kann hierbei als Prädiktionsfehler des Maschinenlernmoduls NN aufgefasst werden. Der Prädiktionsfehler DR kann insbesondere durch Berechnung eines Abstands zwischen den betreffenden Werten ermittelt werden, z.B. gemäß DR = |ORS - R| oder DR = (ORS - R)².

Die ermittelten Prädiktionsfehler DR werden - wie in Figur 3 durch einen strichlierten Pfeil angedeutet - zum Maschinenlernmodul NN zurückgeführt. Anhand der zurückgeführten Prädiktionsfehler DR wird das Maschinenlernmodul NN darauf trainiert, die Prädiktionsfehler DR zumindest im statistischen Mittel zu minimieren. Zur Minimierung der Prädiktionsfehlers DR ist eine Vielzahl von effizienten Optimierungsverfahren verfügbar. Durch die Minimierung der Prädiktionsfehler DR wird das Maschinenlernmodul NN darauf trainiert, zu einem vorgegebenen Paar aus Betriebszustand und Steueraktion eine in die Zukunft akkumulierte Performanz verhältnismäßig genau vorherzusagen.

Zur Beschleunigung des Trainings kann weiterhin vorgesehen sein, dass bei den auf den anfänglichen Betriebszustand S anwendbaren alternativen Steueraktionen A1, ..., AN noch keine Selektion einer anzuwendenden Steueraktion AS vorgenommen wird. Stattdessen wird für alle alternativen Steueraktionen A1, ..., AN durch den trainierten Simulator SIM jeweils ein Folgezustandsdatensatz S1', ... bzw. SN' ermittelt. Für jeden hierdurch spezifizierten Folgezustand werden dann alle nachfolgend anzuwendenden Steueraktionen wieder - wie oben beschrieben - durch das Selektionsmodul SEL selektiert. Auf diese Weise wird durch den Performanzbewerter EV für jede der anfänglichen alternativen Steueraktionen A1, ..., AN eine eigene Zustandstrajektorie ST aufgebaut und ein eigener dem korrespondierenden Paar (S, A1), ... bzw. (S, AN) zugeordneter Performanzwert R1, ... bzw. RN ermittelt. In diesem Fall werden die zu minimierenden Prädiktionsfehler DR jeweils durch die Abweichung eines jeweiligen Performanzwerts RJ vom korrespondierenden Ausgabewert ORJ, J=1, ..., N, gebildet, z.B. gemäß DR = |ORJ - RJ| oder DR = (ORJ - RJ)².

Vorzugsweise kann durch den Performanzbewerter EV aus den akkumulierten Performanzwerten R eine Regelungsgüte abgeleitet werden. Diese kann beispielsweise als statistischer Mittelwert, insbesondere als gleitender Mittelwert der akkumulierten Performanzwerte R ermittelt werden. Die Regelungsgüte kann als Maßstab für die bereits erreichte Qualität der Maschinensteuerung CTL dienen. Das Training kann dann so lange weitergeführt werden, bis die Regelungsgüte einen vorgegebenen Gütewert erreicht.

Mittels des trainierten Maschinenlernmoduls NN kann die Maschine M dann wie im Zusammenhang mit Figur 1 beschrieben gesteuert werden.

## Patentansprüche

1. Computerimplementiertes Verfahren zum Steuern einer Maschine (M), wobei
a) eine Vielzahl von ersten Trainingsdatensätzen (TD1) eingelesen wird, in denen jeweils einem Betriebszustand (S) der Maschine eine Steueraktion (A) zugeordnet ist,
b) aus den in den ersten Trainingsdatensätzen (TD1) spezifizierten Betriebszuständen (S) und Steueraktionen (A) weitere Trainingsdatensätze (TDE) mit neuen Zuordnungen von Betriebszuständen und Steueraktionen generiert werden, so dass einem jeweiligen Betriebszustand (S) mehrere alternative Steueraktionen (A1, ..., AN) zugeordnet werden,
c) ein Maschinenlernmodul (NN) mittels der ersten und der weiteren Trainingsdatensätze darauf trainiert wird, anhand eines Betriebszustandes und einer Steueraktion eine über eine Zustandstrajektorie (ST) aufeinanderfolgender Betriebszustände akkumulierte Performanz der Maschine als resultierenden Ausgabewert zu prädizieren, wobei
- ein einem jeweils betrachteten Betriebszustand (S) in einer Zustandstrajektorie (ST) nachfolgender Betriebszustand (S') ermittelt wird, indem für die dem betrachteten Betriebszustand (S) zugeordneten alternativen Steueraktionen (A1, ..., AN) jeweils der betrachtete Betriebszustand sowie die jeweilige alternative Steueraktion in das Maschinenlernmodul (NN) eingespeist werden, abhängig von den resultierenden Ausgabewerten (OR1, ..., ORN) des Maschinenlernmoduls eine der alternativen Steueraktionen selektiert wird, und mittels eines Simulators (SIM) der Maschine ein aus Anwendung der selektierten Steueraktion (AS) auf den betrachteten Betriebszustand (S) resultierender Betriebszustand als nachfolgender Betriebszustand (S') ermittelt wird,
- mittels eines Performanzbewerters (EV) ein über die Betriebszustände einer jeweiligen Zustandstrajektorie (ST) akkumulierter Performanzwert (R) ermittelt wird, und
- das Maschinenlernmodul (NN) darauf trainiert wird, die ermittelten akkumulierten Performanzwerte (R) zu reproduzieren, und
d) zum Steuern der Maschine (M)
- ein aktueller Betriebszustand (S)der Maschine erfasst wird,
- für dem aktuellen Betriebszustand (S) zugeordnete alternative Steueraktionen (A1, ..., AN) jeweils eine akkumulierte Performanz (R1, ..., RN) mittels des trainierten Maschinenlernmoduls (NN) prädiziert wird,
- die Maschine durch eine die prädizierte akkumulierte Performanz optimierende Steueraktion (AS) angesteuert wird, und
- bei nicht erfolgreicher Ausführung der optimierenden Steueraktion (AS) eine andere der alternativen Steueraktionen (A1, ..., AN) abhängig von deren akkumulierter Performanz zum Steuern der Maschine selektiert wird.

2. Verfahren nach Anspruch 1, **dadurch gekennzeichnet, dass**
dem aktuellen Betriebszustand (S) zugeordnete alternative Steueraktionen (A1,...) zusammen mit einer jeweils prädizierten akkumulierten Performanz (R1,...) über eine Benutzerschnittstelle (IO) zur Auswahl einer auszuführenden Steueraktion (AS) ausgegeben werden.

3. Verfahren nach einem der vorhergehenden Ansprüche, **dadurch gekennzeichnet, dass** einem jeweiligen in den ersten Trainingsdatensätzen (TD1) spezifizierten Betriebszustand (S) neben einer Steueraktion (A) ein aus Anwendung der Steueraktion (A) auf den Betriebszustand (S) resultierender Folgezustand (S') zugeordnet ist.

4. Verfahren nach Anspruch 3, **dadurch gekennzeichnet, dass**
der Simulator (SIM) mittels der ersten Trainingsdatensätze (TD1) darauf trainiert wird, anhand eines jeweiligen Betriebszustands (S) und einer jeweiligen Steueraktion (A) den jeweils resultierenden Folgezustand (S') zu reproduzieren.

5. Verfahren nach Anspruch 3 oder 4, **dadurch gekennzeichnet, dass**
die in den ersten Trainingsdatensätzen (TD1) spezifizierten Betriebszustände (S), Steueraktionen (A) und/oder Folgezustände (S') in einem laufenden Betrieb der Maschine (M) oder einer dazu baugleichen oder ähnlichen Maschine erfasst werden.

6. Verfahren nach einem der vorhergehenden Ansprüche, **dadurch gekennzeichnet,**
**dass** in einem jeweiligen Betriebszustand (S) anwendbare Steueraktionen (A1, ..., AN) ermittelt werden, und
**dass** dem jeweiligen Betriebszustand alle anwendbaren Steueraktionen als alternative Steueraktionen (A1, ..., AN) zugeordnet werden.

7. Verfahren nach einem der vorhergehenden Ansprüche, **dadurch gekennzeichnet,**
**dass** bei der Ermittlung eines nachfolgenden Betriebszustands (S') der Zustandstrajektorie (ST) diejenige alternative Steueraktion selektiert wird, die den resultierenden Ausgabewert (OR1,..., ORN) des Maschinenlernmoduls (NN) optimiert.

8. Verfahren nach einem der vorhergehenden Ansprüche, **dadurch gekennzeichnet,**
**dass** bei nicht erfolgreicher Ausführung einer ersten Steueraktion diejenige andere alternative Steueraktion zum Steuern der Maschine selektiert wird, für die eine gegenüber der ersten Steueraktion nächstbeste akkumulierte Performanz prädiziert wurde.

9. Verfahren nach einem der vorhergehenden Ansprüche, **dadurch gekennzeichnet, dass** eine Aktionsauswahlregel (POL) zum Auswählen einer in einem aktuellen Betriebszustand (S) anzuwendenden Steueraktion (AS) dergestalt implementiert wird,
dass für den aktuellen Betriebszustand (S) und eine oder mehrere anwendbare Steueraktionen (A1, ..., AN) jeweils eine akkumulierte Performanz durch das trainierte Maschinenlernmodul (NN) prädiziert wird, und
dass diejenige der einen oder mehreren anwendbaren Steueraktionen (A1, ..., AN) als anzuwendende Steueraktion (AS) ausgewählt wird, für die beste akkumulierte Performanz prädiziert wurde.

10. Verfahren nach einem der vorhergehenden Ansprüche, **dadurch gekennzeichnet,**
**dass** während des Trainings des Maschinenlernmoduls (NN) eine Regelungsgüte aus den akkumulierten Performanzwerten (R) abgeleitet wird, und
**dass** das Training so lange weitergeführt wird, bis eine vorgegebene Regelungsgüte erreicht ist.

11. Maschinensteuerung (CTL), eingerichtet zum Ausführen aller Verfahrensschritte eines Verfahrens nach einem der vorhergehenden Ansprüche.

12. Computerprogrammprodukt umfassend Befehle, die bei der Ausführung des Programms durch einen Computer eine Maschinensteuerung nach Anspruch 11 dazu veranlassen, ein Verfahren nach einem der Ansprüche 1 bis 10 auszuführen.

13. Computerlesbares Speichermedium mit einem Computerprogrammprodukt nach Anspruch 12.
